# EUROPÄISCHE PATENTSCHRIFT

(11) **EP 1 671 052 B1**
(45) Veröffentlichungstag und Bekanntmachung des Hinweises auf die Patenterteilung: **03.01.2007**
(21) Anmeldenummer: 04790105.3
(22) Anmeldetag: 04.10.2004
(51) Int. Cl.: F16H 57/02

(54) **STELLVORRICHTUNG**
ACTUATING DEVICE
DISPOSITIF DE REGLAGE

(30) Priorität: 07.10.2003 DE 10346403
(43) Veröffentlichungstag der Anmeldung: 21.06.2006
(73) Patentinhaber: Pierburg GmbH, 41460 Neuss (DE)
(72) Erfinder: KÖSTER, Andreas, 45149 Essen (DE); DISMON, Heinrich, 52538 Gangelt (DE); VITT, Stefan, 41472 Neuss (DE)
(74) Vertreter: Ter Smitten, Hans
(86) Internationale Anmeldenummer: PCT/EP2004/011047
(87) Internationale Veröffentlichungsnummer: WO 2005/036030

(56) Entgegenhaltungen:
- EP-A- 0 428 895
- DE-A- 4 324 876
- DE-A- 10 047 308

## Beschreibung

Die Erfindung betrifft eine Stellvorrichtung mit einer Antriebseinheit, die einen Elektromotor aufweist, der in einem Gehäuse angeordnet ist und eine Antriebswelle antreibt und mit einer Getriebeeinheit, die ein zumindest drehfest auf der Antriebswelle angeordnetes Antriebszahnrad aufweist, welches in einer ersten Getriebestufe mit zumindest einem Planetenzahnrad kämmend in Eingriff steht, welches als Doppelzahnrad ausgeführt ist und auf einer Achse ortsfest und drehbar gelagert ist, wobei das Antriebszahnrad das größere Zahnrad des Doppelzahnrades antreibt und das kleinere Zahnrad, welches in Richtung der Abtriebsseite weist, in einer zweiten Getriebestufe mit einem innen verzahnten Hohlrad oder Hohlradsegment kämmend in Eingriff steht, welches zumindest drehfest auf einer Abtriebswelle angeordnet ist, so daß die Abtriebswelle über die beiden Getriebestufen antreibbar ist.

In der gattungsgemäßen DE 100 47 308 A1 wird eine zweistufige Getriebeanordnung für eine Stellvorrichtung beschrieben, welche eine Antriebswelle aufweist, auf der ein Antriebszahnrad angeordnet ist und welche in Wirkverbindung mit einem zweistufigen Getriebe steht, an dessen Abtriebsseite eine zentral angeordnete Abtriebswelle angeordnet ist. Im einzelnen erfolgt die Übertragung vom Antriebszahnrad über drei Doppelzahnräder, deren jeweils größeres Zahnrad mit dem Antriebszahnrad kämmt und deren jeweils kleineres Zahnrad mit einem Hohlrad kämmt, welches auf der Abtriebswelle angeordnet ist. Die gesamte zweistufige Getriebeanordnung befindet sich in einem insgesamt dreiteiligen Gehäuse, wobei das erste am nächsten zum Antriebsmotor gelegene im wesentlichen plattenförmige Teil die Lagerung der Antriebswelle sowie der Achsen für die Doppelzahnräder aufweist. In einem zweiten Gehäuseteil in Form eines Gehäusekäfigs sind die drei Doppelzahnräder angeordnet, deren Achsen an ihrem zweiten Ende im Gehäusekäfig gelagert sind. Zusätzlich weist dieser Gehäusekäfig auch eine erste Lagerstelle für die Abtriebswelle auf, auf der ein Hohlrad angeordnet ist, welches mit den jeweils kleineren Zahnrädern der Doppelzahnräder kämmt. Diese Getriebeeinheit wird durch ein drittes Gehäuseteil, welches auf das zweite aufgesetzt wird und eine zweite Lagerstelle für die Abtriebswelle aufweist im wesentlichen dicht verschlossen. Außerdem ist ein Deckel aus Gehäuse befestigt, der die Antriebseinheit und die Getriebeeinheit nach außen verchließt. Nachteilig an einer solchen Ausführungsform ist die große Anzahl der zu verwendenden und zu montierenden Bauteile, welche in ihren Größen sehr genau aufeinander abgestimmt sein müssen. Daraus folgt ein erhöhter Montage- und Herstellungsaufwand, da die jeweiligen Achsen der Doppelzahnräder, der Antriebswelle und der Abtriebswelle sehr genau aufeinander abgestimmt sein müssen, also eine geringe Toleranz bezüglich ihrer parallelen Lage zueinander eingehalten werden muss.

Aufgabe der Erfindung ist es daher, eine Stellvorrichtung mit einer Getriebeeinheit zu verwirklichen, bei der der Montageaufwand sowie die Bauteileanzahl deutlich reduziert werden, wobei dennoch die sichere Funktion der Stellvorrichtung sicher gestellt werden soll, so dass Herstell- und Montagekosten reduziert werden.

Diese Aufgabe wird dadurch gelöst, daß der Deckel derart ausgeführt ist, daß eine Lagerung der nach außen weisenden Abtriebswelle einseitig ausgeführt und im Deckel angeordnet ist. Durch eine solche erfindungsgemäße Ausführung kann das gesamte Gehäuse lediglich zweiteilig ausgeführt werden, da die Notwendigkeit einer zweiten Lagerstelle der Abtriebswelle und somit die Notwendigkeit des Getriebekäfigs entfällt. Hierdurch entsteht eine leichtere Zugänglichkeit bei der Montage sowie eine Reduzierung der Bauteileanzahl und der Baulänge der Getriebeeinheit. Die Lagerstelle der Abtriebswelle im Deckel ist dabei ausreichend lang ausgeführt, so dass auftretende Querkräfte aufgenommen werden können.

In einer weiterführenden Ausführungsform weist die Getriebeeinheit lediglich ein Doppelzahnrad auf, welches drehbar auf einer Achse angeordnet ist, die an einem Motorlagerschild befestigt ist, in welchem auch die getriebeseitige Lagerung der als Antriebswelle dienenden Motorwelle angeordnet ist und welches mit dem Gehäuse des Elektromotors fest verbindbar ist. Zusätzlich zu der daraus folgenden Reduzierung der Anzahl der benötigten Bauteile entsteht durch die Befestigung des Motorlagerschildes am Gehäuse eine Verbesserung der Schwingfestigkeit der Stellvorrichtung. Des weiteren wird die Montage deutlich erleichtert, da ein einfaches aufeinandersetzen der Bauteile ermöglicht wird. Durch das einzelne Doppelzahnrad werden die Anforderungen an die Fertigungstoleranzen insbesondere der Parallelität der Achsen reduziert, so dass Herstellkosten eingespart werden können.

In einer bevorzugten Ausführungsform ist die Achse des Doppelzahnrades auf der zum Motorlagerschild entgegengesetzten Seite im Deckel gelagert und das Hohlrad oder Hohlradsegment weist eine korrespondierende Ausnehmung auf, wodurch auftretende Querkräfte im Getriebe und insbesondere am Doppelzahnrad durch die zweiseitige Lagerung der Achse abgefangen werden können, ohne zusätzliche Bauteile verwenden zu müssen.

Die beschriebenen Ausführungsformen weisen eine geringe Bauteileanzahl auf, so daß auf verringerter Baulänge die Funktionalität bekannter elektromotorischer Antriebe erhalten bleibt. Die gesamte Stellvorrichtung kann im Gehäuse einzeln montiert werden also zunächst der Motor eingesteckt werden, woraufhin das Motorlagerschild am Gehäuse und somit auf dem Motor befestigt werden kann. In den weiteren Schritten können die Zahnräder eingebracht werden und in einem letzten Schritt die gesamte Einheit durch den Deckel verschlossen werden. Eine solche Montage ist sehr einfach durchzuführen und erfordert aufgrund der integrierten Bauteile und des reduzierten Bauteileaufwandes lediglich eine geringe Anzahl an Montageschritten. Auch bei der Herstellung können Kosten nicht zuletzt durch den Zukauf von nicht zusätzlich aufeinander abgestimmter Einzelteile reduziert werden.

Eine erfindungsgemäße Stellvorrichtung ist in den Zeichnungen dargestellt und wird nachfolgend beschrieben.
Figur 1 zeigt in perspektivischer Ansicht einen Ausschnitt einer erfindungsgemäßen Stellvorrichtung im zusammengebauten Zustand mit aufgeschnittenem Gehäuse.
Figur 2 zeigt den Ausschnitt der erfindungsgemäße Stellvorrichtung aus Figur 1 in gesprengter Darstellung.

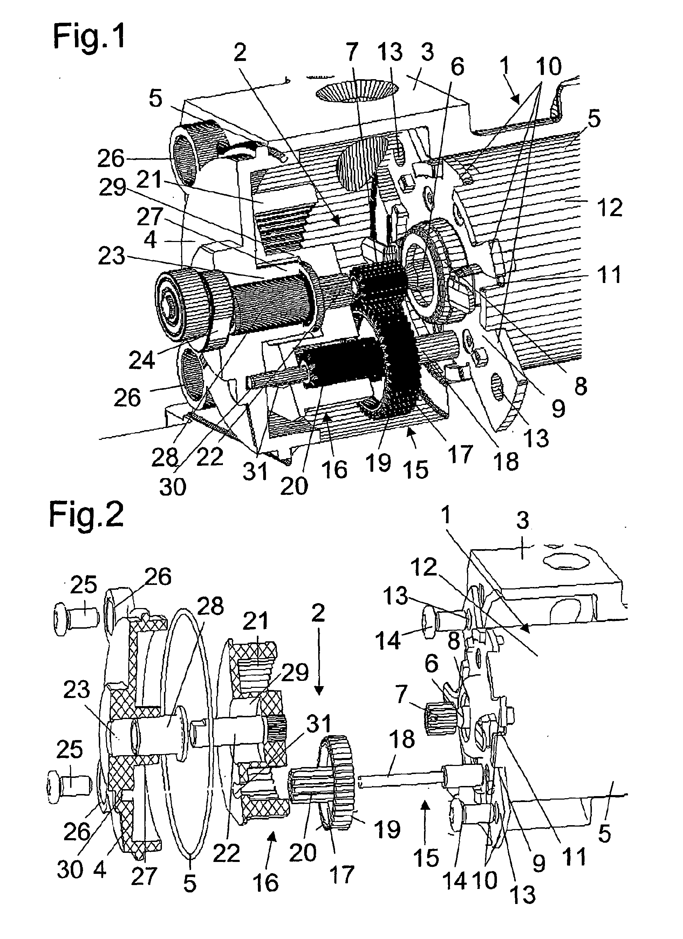

Die in Figur 1 dargestellte erfindungsgemäße Stellvorrichtung besteht aus einer Antriebseinheit 1 und einer Getriebeeinheit 2, welche in einem Gehäuse 3 angeordnet sind. Das Gehäuse 3 ist im wesentlichen topfförmig ausgebildet und wird an der Abtriebsseite durch einen Deckel 4 unter Zwischenlage einer Dichtung 5 dicht verschlossen.

Die Antriebseinheit 1 besteht aus einem Elektromotor 5, auf dessen Antriebswelle 6 ein Antriebszahnrad 7 zumindest drehfest angeordnet ist. Die Lagerung der Antriebswelle 6 erfolgt über eine Lagerstelle 8, welche in einem Motorlagerschild 9 angeordnet ist. Dieses Motorlagerschild 9 weist Ausstülpungen 10 auf, die in entsprechende Ausnehmungen 11 eines Polrohres 12 des Motors 5 eingreifen, so daß das Polrohr 12 zur Getriebeeinheit 2 drehfest angeordnet ist. Einige dieser Ausstülpungen 10 weisen zudem Bohrungen 13 auf, über die das Motorlagerschild 9 und somit der Elektromotor 5 am Gehäuse 3 mittels Schrauben 14 befestigt werden kann. Bei Verwendung eines Bürstenmotors ist es des weiteren möglich am Motorlagerschild 9 Halterungen für Kommutatorbürsten und die zugehörigen Federn anzubringen. In jedem Fall können auch bei Verwendung eines elektronisch kommutierten Elektromotors Kontaktfahnen für die Stromzuführung über das Motorlagerschild 9 verwirklicht werden.

Die Getriebeeinheit 2 besteht aus einer ersten Getriebestufe 15 und einer zweiten Getriebestufe 16. Die erste Getriebestufe 15 wiederum besteht aus dem bereits erwähnten Antriebszahnrad 7, welches mit einem Planetenzahnrad 17 in Form eines Doppelzahnrades kämmt. Dieses Doppelzahnrad 17 ist auf einer Achse 18 drehbar angeordnet, welche wiederum motorseitig am Motorlagerschild 9 befestigt ist. Ein größeres Zahnrad 19 des Doppelzahnrades 17 wird somit durch das Antriebszahnrad 7 angetrieben, wodurch auch ein kleineres Zahnrad 20 des Doppelzahnrades 17 entsprechend in Drehung versetzt wird. Dieses kleinere Zahnrad 20 ist das erste Teil der zweiten Getriebestufe 16 und kämmt mit einem als Hohlradsegment 21 ausgeführten innen verzahnten Zahnrad, welches auf einer Abtriebswelle 22 zumindest drehfest angeordnet ist. Die Abtriebswelle 22 reicht durch eine zentrale Öffnung 23 im Deckel nach außen und treibt im vorliegenden Beispiel einen Excenter 24 an, der beispielsweise in Wirkverbindung mit einer Ventilstange eines Abgasrückführventils stehen kann.

Der Deckel 4 wird über Schrauben 25 am Gehäuse 3 befestigt, wobei dazu am Dekkel 4 entsprechende Augen 26 ausgebildet sind. Die zentrale Öffnung 23 des Dekkels 4, durch welchen die Abtriebswelle 22 reicht, ist so ausgebildet, daß ein in axialer Richtung ausreichend langer Absatz 27 im Deckel gebildet ist, der die Öffnung beziehungsweise Bohrung 23 aufweist. In dieser Bohrung 23 ist ein Lager 28 angeordnet, in dem die Abtriebswelle 22 mit dem Hohlradsegment 21 gelagert wird. Um diese Lagerung 28 ausreichend lang ausführen zu können, ist eine mit dem Absatz 27 korrespondierende ringförmige Ausnehmung 29 am Hohlradsegment 21 ausgebildet. Des weiteren weist der Deckel 4 ein Sackloch auf, welches als zweite Lagerstelle 30 für die Achse 18 auf der das Doppelzahnrad 17 angeordnet ist, dient. Entsprechend muß die Achse 18 durch das Hohlradsegment 21 reichen können, so daß am Hohlradsegment 21 eine Ausnehmung 31 ausgeführt ist, welche teilringförmig in konstantem radialen Abstand zur Abtriebswelle 22 angeordnet ist und in ihrer Höhe im wesentlichen dem Durchmesser der Achse 18 entspricht. Über welchen Umfangswinkel diese Ausnehmung 31 verläuft ist abhängig vom jeweils zu erfüllenden Stellwinkel der Stellvorrichtung.

Die Montage kann nun auf einfache Weise derart erfolgen, daß zunächst der Motor 5 in das Gehäuse 3 eingesetzt wird und durch die entsprechende Anordnung und Befestigung des Motorlagerschildes 9 am Gehäuse 3 befestigt wird. Nun kann das Doppelzahnrad 17 auf die bereits am Motorlagerschild 9 befestigte Achse 18 aufgeschoben werden, so daß das größere Zahnrad 19 mit dem bereits vormontierten Antriebszahnrad 7 kämmt. Nach Befestigung der Abtriebswelle 22 sowie des Lagers 28 am Deckel 4 kann dieser Deckel mit dem auf der Abtriebswelle 22 vormontierten Hohlradsegment 21 auf das Gehäuse 3 derart aufgesetzt werden, daß die Achse 18 in das Sackloch 30 greift und gleichzeitig automatisch auch das Hohlradsegment 21 in die Zähne des kleineren Zahnrades 20 greift. Dies erfolgt unter Zwischenlage der Dichtung 5, so daß nun der Deckel 4 am Gehäuse 3 verschraubt werden kann.

Bei Antrieb des Elektromotors 5 wird nun die Drehung der Antriebswelle 6 des Elektromotors 5 über die beiden Getriebestufen 15,16 auf die Abtriebswelle 22 untersetzt übertragen.

Diese erfindungsgemäße Ausführung benötigt im Vergleich zu bekannten Stellvorrichtungen eine geringere Baulänge durch Wegfall des Getreibekäfigs sowie eine Reduzierung der Bauteileanzahl insbesondere durch Verwendung lediglich eines Doppelzahnrades bei gleichzeitiger Sicherung der Funktion. Durch Verringerung der benötigten Montageschritte vereinfacht sich diese deutlich. Eine Kostenoptimierung ist die Folge. Auch die Herstellkosten sinken aufgrund der geringeren Bauteileanzahl und der geringeren einzuhaltenden Toleranzen.

Es wird deutlich, daß eine solche Stellvorrichtung nicht nur für einen wie im Ausführungsbeispiel gezeigten Exzenterantrieb, sondern für jeden anderen rotatorischen Antrieb mit geforderter Untersetzung insbesondere in Verbrennungsmotoren einsetzbar ist.

## Patentansprüche

1. Stellvorrichtung mit einer Antriebseinheit (1), die einen Elektromotor (5) aufweist, der in einem Gehäuse (3) angeordnet ist und eine Antriebswelle (6) antreibt und mit einer Getriebeeinheit (2), die ein zumindest drehfest auf der Antriebswelle (6) angeordnetes Antriebszahnrad (7) aufweist, welches in einer ersten Getriebestufe (15) mit zumindest einem Planetenzahnrad kämmend in Eingriff steht, welches als Doppelzahnrad (17) ausgeführt ist und auf einer Achse (18) ortsfest und drehbar gelagert ist, wobei das Antriebszahnrad (7) das größere Zahnrad (19) des Doppelzahnrades (17) antreibt und das kleinere Zahnrad (20), welches in Richtung der Abtriebsseite weist in einer zweiten Getriebestufe (16) mit einem innen verzahnten Hohlrad oder Hohlradsegment (21) kämmend in Eingriff steht, welches zumindest drehfest auf einer Abtriebswelle (22) angeordnet ist, so daß die Abtriebswelle (22) über die beiden Getriebestufen (15, 16) antreibbar ist, wobei ein Deckel (4) am Gehäuse (3) befestigt ist, der die Antriebseinheit (1) und die Getriebeeinheit (2) nach außen dicht verschließt, **dadurch gekennzeichnet, daß** der Deckel (4) derart ausgeführt ist, daß eine Lagerung (28) der nach außen weisenden Abtriebswelle (22) einseitig ausgeführt und im Deckel (4) angeordnet ist.

2. Stellvorrichtung nach Anspruch 1, **dadurch gekennzeichnet, daß** die Getriebeeinheit (2) lediglich ein Doppelzahnrad (17) aufweist, welches drehbar auf einer Achse (18) angeordnet ist, die an einem Motorlagerschild (9) befestigt ist, in welchem auch die getriebeseitige Lagerung (8) der Antriebswelle (6) angeordnet ist und welches mit dem Gehäuse (3) des Elektromotors (5) fest verbindbar ist.

3. Stellvorrichtung nach Anspruch 2, **dadurch gekennzeichnet, daß** die Achse (18) des Doppelzahnrades (17) auf der zum Motorlagerschild (9) entgegengesetzten Seite im Deckel (3) gelagert ist und das Hohlrad oder Hohlradsegment (21) eine korrespondierende Ausnehmung (31) aufweist.

## Claims

1. Actuating device with a drive unit (1) comprising an electric motor (5) which is disposed in a casing (3) and drives a drive shaft (6), and with a gear unit (2) comprising a driving gear wheel (7) which is disposed at least in a rotationally rigid manner on the drive shaft (6) and meshes in a first gear stage (15) with at least one planetary gear wheel which is constructed as a double gear wheel (17) and is mounted in a stationary and rotatable manner on a shaft (18), wherein the driving gear wheel (7) drives the larger gear wheel (19) of the double gear wheel (17) and the smaller gear wheel (20), which points in the direction of the driven side, meshes in a second gear stage (16) with an internally toothed ring gear or ring gear segment (21) which is disposed at least in a rotationally rigid manner on a driven shaft (22), so that the driven shaft (22) can be driven via the two gear stages (15, 16), wherein a cover (4) is fastened to the casing (3), which cover tightly closes the drive unit (1) and the gear unit (2) on the outside, **characterised in that** the cover (4) is constructed such that a bearing (28) of the outward pointing driven shaft (22) is constructed on one side and disposed in the cover (4).

2. Actuating device according to Claim 1, **characterised in that** the gear unit (2) comprises just one double gear wheel (17) which is rotatably mounted on a shaft (18) fastened to a motor end shield (9) in which the gear-side bearing (8) of the drive shaft (6) is also disposed and which can be firmly connected to the casing (3) of the electric motor (5).

3. Actuating device according to Claim 2, **characterised in that** the shaft (18) of the double gear wheel (17) is mounted in the cover (3) on the side which is opposite the motor end shield (9), and the ring gear or ring gear segment (21) comprises a corresponding recess (31).

## Revendications

1. Dispositif de réglage comprenant une unité d'entraînement (1) qui comporte un moteur électrique (5), qui est disposé dans un boîtier (3) et entraîne un arbre d'entraînement (6), et comprenant une unité d'engrenage (2), qui présente une roue dentée d'entraînement (7) disposée au moins sans possibilité de rotation sur l'arbre d'entraînement (6), laquelle roue est en prise par engrènement dans un premier étage d'engrenage (15) avec au moins une roue dentée satellite, qui est réalisée sous forme de roue dentée double (17) et est supportée de manière stationnaire et avec possibilité de rotation sur un axe (18), la roue dentée d'entraînement (7) entraînant la plus grande roue dentée (19) de la roue dentée double (17), et la plus petite roue dentée (20), qui est orientée en direction du côté sortie, étant en prise par engrènement dans un deuxième étage d'engrenage (16) avec une couronne ou segment de couronne (21) denté vers l'intérieur, qui est disposé au moins sans possibilité de rotation sur un arbre de sortie (22), de telle sorte que l'arbre de sortie (22) peut être entraîné par les deux étages d'entraînement (15, 16), un couvercle (4), qui ferme de manière étanche l'unité d'entraînement (1) et l'unité d'engrenage (4) par rapport à l'extérieur, étant fixé sur le boîtier (3), **caractérisé en ce que** le couvercle (4) est réalisé de telle façon qu'un support (28) de l'arbre de sortie (22) orienté vers l'extérieur est réalisé unilatéralement et est disposé dans le couvercle (4).

2. Dispositif de réglage selon la revendication 1, **caractérisé en ce que** l'unité d'engrenage (2) présente uniquement une roue dentée double (17) qui est disposée avec possibilité de rotation sur un axe (18) qui est fixé sur un flasque de moteur (9), dans lequel est également disposé le support (8) du côté engrenage de l'arbre d'entraînement (6), et qui peut être fermement relié au boîtier (3) du moteur électrique (5).

3. Dispositif de réglage selon la revendication 2, **caractérisé en ce que** l'axe (18) de la roue dentée double (17) est supporté dans le couvercle (3) sur le côté opposé au flasque de moteur (9) et la couronne ou segment de couronne (21) présente un évidement (31) correspondant.
